(19)

Europäisches
Patentamt
European
Patent Office
Office européen
des brevets

(11) **EP 2 949 129 B1**

(12) **EUROPEAN PATENT SPECIFICATION**

(45) Date of publication and mention
of the grant of the patent:
**14.06.2017 Bulletin 2017/24**

(51) Int Cl.:
***H04Q 11/00*** *(2006.01)*

(21) Application number: **14711647.9**

(86) International application number:
**PCT/US2014/018770**

(22) Date of filing: **26.02.2014**

(87) International publication number:
**WO 2014/134208 (04.09.2014 Gazette 2014/36)**

(54) **TRANSMISSION PRIORITIZATION BASED ON POLLING TIME**

ÜBERTRAGUNGSPRIORISIERUNG AUF BASIS DER ABFRAGEZEIT

ÉTABLISSEMENT D'ORDRE DE PRIORITÉ D'ÉMISSION BASÉ SUR UN TEMPS D'INVITATION À ÉMETTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2013 US 201361770235 P**

(43) Date of publication of application:
**02.12.2015 Bulletin 2015/49**

(73) Proprietor: **Huawei Technologies Co., Ltd.
Longgang District
Shenzhen, Guangdong 518129 (CN)**

(72) Inventors:
• **MCGARRY, Michael P.
El Paso, Texas 79968 (US)**

• **LUO, Yuanqiu
Cranbury, New Jersey 08512 (US)**

(74) Representative: **Thun, Clemens
Mitscherlich PartmbB
Patent- und Rechtsanwälte
Sonnenstraße 33
80331 München (DE)**

(56) References cited:
• **BOYD E ET AL: "EPoC Application & MAC Performance", , 2012, pages 1-17, XP002723314, Retrieved from the Internet: URL:store.eventarchives.com/archive/ncta/2 012/springtechnicalforum/presentations/a22 2_1.pdf [retrieved on 2014-04-14]**

EP 2 949 129 B1

**Description**

**BACKGROUND**

A passive optical network (PON) is one system for providing network access over "the last mile." The PON is a point-to-multi-point (P2MP) network comprised of an optical line terminal (OLT) at the central office, an optical distribution network (ODN), and a plurality of optical network units (ONUs) at the customer premises. Ethernet passive optical network (EPON) is a PON standard developed by the Institute of Electrical and Electronics Engineers (IEEE) and is specified in IEEE 802.3ah. In EPON, a single fiber may be used for both downstream transmission (i.e., from the OLT to the ONUs) and upstream transmission (i.e., from the ONUs to the OLT) by using different wavelengths.

The OLT may implement an EPON media access control (MAC) layer for transmission of Ethernet frames. Multi-point control protocol (MPCP) may be implemented for bandwidth assignment, bandwidth polling, auto-discovery, and ranging. Ethernet frames may be broadcast downstream based on a logical link identifier (LLID) embedded in a preamble frame. Upstream bandwidth may be assigned based on polling, which may refer to arbitration of access to a network, particularly bandwidth assignment.

For example, XP002723314 refers to EPoC applications and MAC performance.

Hybrid networks may employ two main stages, a first optical/fiber stage and a second electrical/copper stage. The second electrical/copper stage may be, for instance, coaxial (coax) or twisted pair. Ethernet over Coax (EoC) may be a generic name used to describe all technologies that transmit Ethernet frames over such a hybrid network. EoC technologies may include EPON Protocol over Coax (EPoC), Data over Cable Service Interface Specification (DOCSIS), Multimedia over Coax Alliance (MoCA), G.hn (a common name for a home network technology family of standards developed under the International Telecommunication Union (ITU) and promoted by the HomeGrid Forum), Home Phoneline Networking Alliance (HPNA), and Home Plug Audio/Visual (A/V). EoC technologies may be adapted to run outdoor coax access from an ONU to an EoC head end with connected customer premises equipment (CPEs) located in subscribers' homes. There is a rising demand for EPoC, which may provide for the use of EPON as an access system to interconnect with multiple coaxial cables to terminate coaxial network units (CNUs) located in subscribers' homes.

**SUMMARY**

In one embodiment, the disclosure includes apparatus characterized by:

a receiver configured to receive a plurality of instructions, a plurality of first messages, and a plurality of second messages; wherein the first messages are gate messages and the second messages are upstream transmission windows, wherein each gate message indicates an upstream transmission window start time and a size of a corresponding upstream transmission window;.

a processor coupled to the receiver and configured to process the instructions, the first messages, and the second messages; and

a transmitter coupled to the processor and configured to transmit the second messages based on the instructions, wherein the instructions instruct the processor to transmit the second messages based on polling times, wherein polling times are total times from initiation of polling signaling from an optical line terminal, OLT, to a time a first bit transmitted from the apparatus is received at the OLT.

In yet another embodiment, the disclosure includes method performed by an apparatus, the method characterized by:

receiving a plurality of instructions for prioritizing data transmissions;
processing the instructions;
receiving the data transmissions; and
transmitting the data transmissions based on the instructions, wherein the instructions instruct prioritizing of the data transmissions so that one of the data transmissions associated with a shortest polling time is transmitted first, wherein a polling time is a total time from initiation of polling signaling from an optical line terminal, OLT, to a time a first bit transmitted from the apparatus is received at the OLT. These and other features will be more clearly understood from the following detailed description taken in conjunction with the accompanying drawings and claims.

**BRIEF DESCRIPTION OF THE DRAWINGS**

For a more complete understanding of this disclosure, reference is now made to the following brief description, taken in connection with the accompanying drawings and detailed description, wherein like reference numerals represent like parts.

FIG. 1 is a schematic diagram of a hybrid optical-electrical network.
FIG. 2 is a schematic diagram of a hybrid optical-electrical network according to an embodiment of the disclosure.
FIG. 3 is a polling timing diagram for the drop point of FIG. 2 according to an embodiment of the disclosure.
FIG. 4 is a polling timing diagram for the drop point and one of the CPEs of FIG. 2 according to an embodiment of the disclosure.
FIG. 5 is a polling timing diagram for the drop point and two of the CPEs of FIG. 2 according to an embodiment of the disclosure.
FIG. 6 is a flowchart illustrating a method of prioritizing data transmissions according to an embodiment of the disclosure.
FIG. 7 is a schematic diagram of a computer system according to an embodiment of the disclosure.

**DETAILED DESCRIPTION**

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents. When a network endpoint, such as a CPE, first accesses the network, the OLT may begin with the CPE an initialization procedure, which may include polling. In addition to when a CPE first accesses the network, the OLT may poll the CPE at any other time the OLT desires. Polling may comprise the OLT sending to the CPE a gate message, or transmission access message, which may be a request for the CPE's bandwidth requirement and other information; the CPE checking its queue for that information; the CPE sending to the OLT an upstream transmission window, which may comprise packets that include a report message with the CPE's bandwidth requirement, as well as user data; and the OLT sending to the CPE the OLT's bandwidth assignment. Generally, a polling time may refer to the total time for those events to occur, in other words, the round trip time of the messages, the processing time at the OLT and the CPE, and the queuing time at the CPE.

Specifically, the polling time may refer to the total time from the initiation of polling signaling from the OLT to the time the first bit transmitted from an intermediate node is received at the OLT. In some networks, multiple CPEs may be connected in parallel. When those networks implement a time division multiple access (TDMA) scheme, it may be necessary to schedule the order which the CPEs transmit in both the polling process and subsequent transmissions.

Existing transmission ordering, or prioritizing, schemes may order CPE transmissions based on CPE registration time, a random order, class, or other criteria. A scheme based on CPE registration time may assign priority to the CPEs who first register with the OLT. A scheme based on a random order may subject the CPEs to a randomizing algorithm and assign priority to the CPEs according to the results of that algorithm. A scheme based on class may assign highest priority to emergency calls in one class and other, lower priorities to non-emergency calls in other classes. The above schemes and other known schemes may be combined in a complementary scheme. The above schemes and other schemes do not, however, necessarily assign transmission order in a way that reduces polling time, reduces buffering time at the intermediate node, improves channel utilization, or otherwise improves network efficiency.

Disclosed herein is a CPE transmission ordering scheme that may reduce polling time, reduce buffering time at the intermediate node, improve channel utilization, and otherwise improve network efficiency. The scheme may apply to hybrid optical-electrical networks such as EoCs, as well as other hybrid or staged networks that employ TDMA or other transmission ordering techniques. The scheme may assign CPE transmission ordering based on polling time so that a CPE with the shortest polling time may transmit first, a CPE with the longest polling time may transmit last, and so on. Transmissions may also be ordered by class so that, for instance, emergency calls are ordered according to polling time and transmitted first and non-emergency calls are ordered according to polling time and transmitted second. The scheme may be implemented at an MAC or other layer.

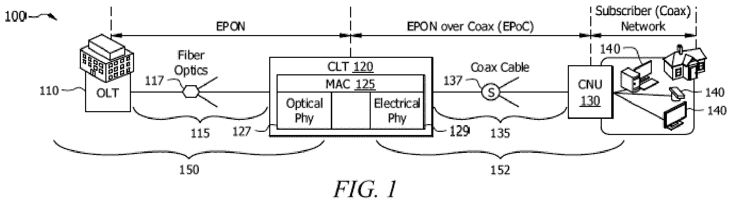

FIG. 1 is a schematic diagram of a hybrid optical-electrical network 100. The network 100 may generally comprise an optical portion 150 and an electrical (e.g., coax or twisted pair) portion 152. The network 100 may specifically comprise an OLT 110, a CNU 130 coupled to subscriber devices 140, and a coax line terminal (CLT) 120 positioned between the OLT 110 and the CNU 130, e.g., between the optical portion 150 and the electrical portion 152. The OLT 110 may be coupled to the CLT 120 via an ODN 115. The ODN 115 may comprise fiber optics and an optical splitter 117 that may couple the OLT 110 to the CLT 120. The CLT 120 may be coupled to the CNUs 130 via an electrical distribution network (EDN) 135, which may comprise a cable splitter 137. Although FIG. 1 shows one CLT 120, one CNU 130, and two subscriber devices 140, the network 100 may comprise any number of CLTs 120, CNUs 130, and subscriber devices 140 in, for instance, branching configurations. The components of the network 100 may be arranged as shown in FIG. 1 or in any other suitable arrangement.

The optical portion 150 may be similar to a PON in that it may be a communications network that does not require any active components to distribute data between the OLT 110 and the CLT 120. Instead, the optical portion 150 may use the passive optical components in the ODN 115 to distribute data between the OLT 110 and the CLT 120. Examples of suitable protocols that may be implemented in the optical portion 150 include asynchronous transfer mode PON (APON) and broadband PON (BPON) defined by The International Telecommunication Union (ITU) Telecommunication Standardization Sector (ITU-T) G.983 standard, gigabit-capable PON (GPON) defined by the ITU-T G.984 standard, EPON defined by IEEE 802.3ah standard, and wavelength-division multiplexing (WDM) PON (WDM-PON).

The OLT 110 may be any device configured to communicate with the CNU 130 via the CLT 120. The OLT 110 may act as an intermediary between the CLT 120 or the CNU 130 and another network (not shown). The OLT 110 may forward data received from the other network to the CLT 120 or the CNU 130 and forward data received from the CLT 120 or the CNU 130 to the other network. Although the specific configuration of the OLT 110 may vary depending on the type of optical protocol implemented in the optical portion 150, the OLT 110 may comprise an optical transmitter and an optical receiver. When the other network is using a network protocol that is different from the protocol used in the optical portion 150, the OLT 110 may comprise a converter that converts the other network protocol into the optical portion 150 protocol. The OLT converter may also convert the optical portion 150 protocol into the other network protocol.

The ODN 115 may be a data distribution system that may comprise optical fiber cables, couplers, splitters, distributors, and other equipment. The optical fiber cables, couplers, splitters, distributors, and other equipment may be passive optical components.

Specifically, the optical fiber cables, couplers, splitters, distributors, and other equipment may be components that do not require any power to distribute data signals between the OLT 110 and the CLT 120. The optical fiber cables may be replaced by any optical transmission media. The ODN 115 may comprise one or more optical amplifiers. The ODN 115 may typically extend from the OLT 110 to the CLT 120 and any optional ONUs (not shown) in a branching configuration as shown in FIG. 1 or in any other suitable arrangement.

The CLT 120 may be any device or component configured to forward downstream data from the OLT 110 to the CNU 130 and forward upstream data from the CNU 130 to the OLT 110. The CLT 120 may convert the downstream and upstream data appropriately to transfer the data between the optical portion 150 and the electrical portion 152. The data transferred over the ODN 115 may be transmitted or received in the form of optical signals, and the data transferred over the EDN 135 may be transmitted or received in the form of electrical signals that may or may not have the same logical structure as the optical signals. The CLT 120 may encapsulate or frame the data in the optical portion 150 and the electrical portion 152 differently. The CLT 120 may include a MAC layer 125 and a physical (PHY) layer, the latter corresponding to the type of signals carried over the respective media. The MAC layer 125 may provide addressing and channel access control services to the PHY layers. The PHY layers may comprise an optical PHY 127 and an electrical PHY 129. The CLT 120 may be transparent to the CNU 130 and the OLT 110 in that the frames sent from the OLT 110 to the CNU 130 may be directly addressed to the CNU 130 (e.g. in the destination address), and vice-versa. As such, the CLT 120 may intermediate between the optical portion 150 and the electrical portion 152. The CLT 120 may also be referred to as a fiber-coaxial unit (FCU).

The electrical portion 152 may be similar to any known electrical communication system. The electrical portion 152 may also be referred to as a copper portion or an electrical portion. The electrical portion 152 may not require any active components to distribute data between the CLT 120 and the CNU 130. Instead, the electrical portion 152 may use passive electrical components in the electrical portion 152 to distribute data between the CLT 120 and the CNU 130. Alternatively, the electrical portion 152 may use some active components, such as amplifiers. Examples of suitable protocols that may be implemented in the electrical portion 152 include MoCA, G.hn (a common name for a home network technology family of standards developed under ITU and promoted by the HomeGrid Forum), HPNA, Home Plug AV, very-high-bit-rate digital subscriber line 2 (VDSL2), and G.fast.

The EDN 135 may be a data distribution system that may comprise electrical cables (e.g., coaxial cables and twisted wires), couplers, splitters, distributors, and other equipment. The electrical cables, couplers, splitters, distributors, and other equipment may be passive electrical components. Specifically, the electrical cables, couplers, splitters, distributors, or other equipment may be components that do not require any power to distribute data signals between the CLT 120 and the CNU 130. It should be noted that the electrical cables may be replaced by any electrical transmission media. The EDN 135 may comprise one or more electrical amplifiers. The EDN 135 may extend from the CLT 120 to the CNU 130 in a branching configuration as shown in FIG. 1 or in any other suitable arrangement.

The CNU 130 may be any device configured to communicate with the OLT 110, the CLT 120, and any subscriber devices 140. Specifically, the CNU 130 may act as an intermediary between the CLT 120 and the subscriber devices 140. For instance, the CNU 130 may forward data received from the CLT 120 to the subscriber devices 140 and forward data received from the subscriber devices 140 to the OLT 110. Although the specific configuration of the CNU 130 may vary depending on the configuration of the network 100, the CNU 130 may comprise an electrical transmitter configured to send electrical signals to the CLT 120 and an electrical receiver configured to receive electrical signals from the CLT 120. Additionally, the CNU 130 may comprise a converter that converts the electrical signal into electrical signals for the subscriber devices 140, such as signals in the asynchronous transfer mode (ATM) protocol, and a second transmitter or receiver that may send or receive the electrical signals to the subscriber devices 140. The CNU 130 may also be referred to as a coaxial network terminal (CNT). The CNU 130 may be located at distributed locations, such as the customer premises, but may be at other locations as well.

The subscriber devices 140 may be any devices configured to interface with a user or a user device. For example, the subscriber devices 140 may include desktop computers, laptop computers, tablets, mobile telephones, residential gateways, televisions, set-top boxes, and similar devices.

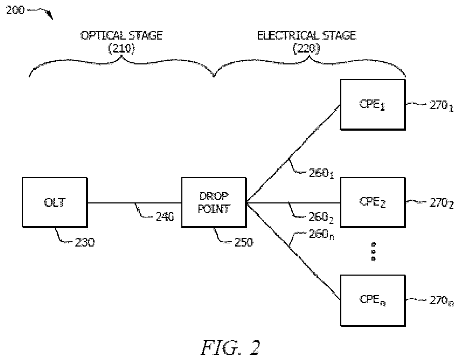

FIG. 2 is a schematic diagram of a hybrid optical-electrical network 200 according to an embodiment of the disclosure. The network may generally comprise two stages, an optical stage 210 and an electrical stage 220. The network may be similar to the network 100. In particular, an OLT 230 may be similar to the OLT 110, a drop point 250 may be similar to the CLT 120, and $CPEs_{1-n}$ $270_{1-n}$ may be similar to the CNU 130. The drop point 250 may comprise an ONU and a digital subscriber line access multiplexer (DSLAM) and may also be referred to as a bridging device. As shown, the $CPEs_{1-n}$ $270_{1-n}$ may connect to the drop point 250 via parallel transmission $channels_{1-n}$ $260_{1-n}$, which may be coaxial cables, and to the OLT 230 via a shared transmission channel 240, which may be an optical fiber.

When one of the $CPEs_{1-n}$ $270_{1-n}$, for instance the $CPE_1$ $270_1$, connects to the network 200 or whenever the OLT 230 otherwise desires, polling may begin. There may be two stages of polling. In a first stage, the OLT 230 may poll the drop point 250. In a second stage, the drop point 250 may poll the $CPEs_{1-n}$ $270_{1-n}$. The order in which the $CPEs_{1-n}$ $270_{1-n}$ transmit upstream may affect polling time.

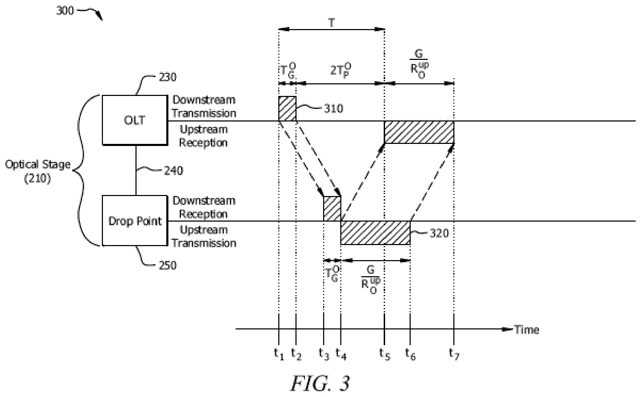

FIG. 3 is a polling timing diagram 300 for the drop point 250 of FIG. 2 according to an embodiment of the disclosure. The diagram 300 may demonstrate the first stage of polling mentioned above. At times $t_1$ and $t_2$, the OLT 230 may begin and end, respectively, transmission of a gate message 310 to the drop point 250 downstream in the optical stage 210. The times such as $t_1$ and $t_2$ may be in seconds (s). The total time from $t_1$, to $t_2$ may be $T_G^O$. The gate message 310 may indicate an upstream transmission window start time and size, the latter of which may be in bits and represented as G. The OLT 230 or another suitable device in the network 200 may assign the upstream transmission window size. At times $t_3$ and $t_4$, the drop point 250 may begin and end, respectively, reception of the gate message 310. The total time from $t_3$ to $t_4$ may also be $T_G^O$. A propagation delay for the gate message 310 from the OLT 230 to the drop point 250 over the shared transmission channel 240 of the optical stage 210 may be $T_P^O$.

After receiving the gate message 310, the drop point 250 may prepare an upstream transmission window 320 in response to the gate message 310. At times $t_4$ and $t_6$, the drop point 250 may begin and end, respectively, transmission of the upstream transmission window 320 to the OLT 230 upstream in the optical stage 210. The total time from $t_4$ to $t_6$ may be $\frac{G}{R_O^{up}}$, where $R_O^{up}$ is a transmission rate of the optical stage 210 in the upstream direction in bits per second (bps). A propagation delay for the upstream transmission window 320 from the drop point 250 to the OLT 230 over the shared transmission channel 240 in the optical stage 210 may also be $T_P^O$. As a result, the total time from $t_2$ to $t_5$ may be $2T_P^O$. At times $t_5$ and $t_7$, the OLT 230 may begin and end, respectively, reception of the upstream transmission window 320 from the drop point 250. The total time from $t_5$ to $t_7$ may also be $\frac{G}{R_O^{up}}$. As can be seen, the upstream transmission window 320 may be bigger, and may therefore take longer to transmit and receive, than the gate message 310. Because of the size of the upstream transmission window 320, the OLT 230 may begin receiving the upstream transmission window 320 before the drop point 250 ends transmitting the upstream transmission window 320. A polling time, T, may be defined by the following equation:

$$T = T_G^O + 2T_P^O . \qquad (1)$$

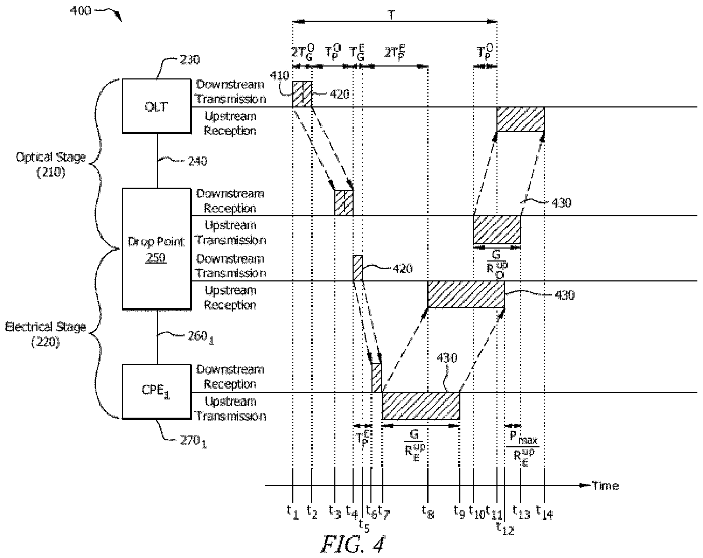

Though T may include $T_G^O$, the time for the OLT 230 to transmit the gate message 310, T may not include $\frac{G}{R_O^{up}}$, the time for the OLT 230 to receive the upstream transmission window 320, because, as described above, T may be defined as ending when the first bit transmitted from an intermediate node, in this case the drop point 250, is received at the OLT, in this case the OLT 230. FIG. 4 is a polling timing diagram 400 for the drop point 250 and one of the $CPEs_{1-n}$ $270_{1-n}$ of FIG. 2 according to an embodiment of the disclosure. In particular, the diagram 400 may be for the drop point 250 and the $CPE_1$ $270_1$. The diagram 400 may have components drawn to different scales in order to emphasize aspects of the diagram 400. The diagram 400 may demonstrate the first stage and second stage of polling mentioned above. At times $t_1$ and $t_2$, the OLT 230 may begin and end, respectively, transmission of two gate messages to the drop point 250 downstream in the optical stage 210. The two gate messages may comprise a first gate message 410 for the drop point 250 and a second gate message 420 for the $CPE_1$ $270_1$. The first gate message 410 may indicate for the optical stage 210 an upstream transmission window size (in bits), which may be G, and the second gate message 420 may indicate for the electrical stage 220 an upstream transmission window size (in bits), which may also be G. The first gate message 410 and the second gate message 420 may each take a time, $T_G^O$, to transmit, so the total time from $t_1$ to $t_2$ may be $2T_G^O$. At times $t_3$ and $t_4$, the drop point 240 may begin and end, respectively, reception of the first gate message 410 and the second gate message 420. The total time from $t_3$ to $t_4$ may also be $2T_G^O$. A propagation delay for the first gate message 410 and the second gate message 420 from the OLT 230 to the drop point 250 over the shared transmission channel 240 may be $T_P^O$.

At times $t_4$ and $t_5$, the drop point 250 may begin and end, respectively, transmission of the second gate message 420 to the $CPE_1$ $270_1$ downstream in the electrical stage 220. The total time from $t_4$ to $t_5$ may be $T_G^E$, which may be longer than $T_G^O$, because the parallel transmission channel$_1$ $260_1$ in the electrical stage 220 may be slower than the shared transmission channel 240 in the optical stage 210. At times $t_6$ and $t_7$, the $CPE_1$ $270_1$ may begin and end, respectively, reception of the second gate message 420. The total time from $t_6$ to $t_7$ may also be $T_G^E$. A propagation delay for the second gate message 420 from the drop point 250 to the $CPE_1$ $270_1$ over the parallel transmission channel$_1$ $260_1$ maybe $T_P^E$.

After receiving the second gate message 420, the $CPE_1$ $270_1$ may prepare an upstream transmission window 430. At times $t_7$ and $t_9$, the $CPE_1$ $270_1$ may begin and end, respectively, transmission of the upstream transmission window 430 upstream to the drop point 250. The total time from $t_7$ to $t_9$ may be $\frac{G}{R_E^{up}}$, where G is an upstream transmission window size (in bits) and $R_E^{up}$ is a transmission rate of the electrical stage 220 in the upstream direction. A propagation delay for the upstream transmission window 430 from the $CPE_1$ $270_1$ to the drop point 250 over the parallel transmission channel$_1$ $260_1$ in the electrical stage 220 may also be $T_P^E$. At times $t_8$ and $t_{12}$, the drop point 250 may begin and end, respectively, reception of the upstream transmission window 430 over the parallel transmission channel$_1$ $260_1$ in the electrical stage 220. The total time from $t_8$ to $t_{12}$ may also be $\frac{G}{R_E^{up}}$. As can be seen, the upstream transmission window 430 may be bigger, and may therefore take longer to transmit and receive, than the second gate message 420. Because of the size of the upstream transmission window 430, the drop point 250 may begin receiving the upstream transmission window 430 before the $CPE_1$ $270_1$ ends transmitting the upstream transmission window 430.

At times $t_{10}$ and $t_{13}$, the drop point 250 may begin and end, respectively, transmission of the upstream transmission window 430 to the OLT 230 upstream in the optical stage 210. The total time from $t_{10}$ to $t_{13}$ may be $\frac{G}{R_O^{up}}$, where $R_O^{up}$ is a transmission rate of the optical stage 210 in the upstream direction. $\frac{G}{R_O^{up}}$ may be shorter than $\frac{G}{R_E^{up}}$ because the shared transmission channel 240 in the optical stage 210 may be faster than the parallel transmission channel$_1$ $260_1$ in the electrical stage 220. At times $t_{11}$ and $t_{14}$, the OLT 230 may begin and end, respectively, reception of the upstream transmission window 430. The total time from $t_{11}$ to $t_{14}$ may also be $\frac{G}{R_O^{up}}$. A propagation delay for the upstream transmission window 430 from the drop point 250 to the OLT 230 over the shared transmission channel 240 may also be $T_P^O$.

The drop point 250 may begin uninterrupted transmission of the upstream transmission window 430 in the optical stage 210 if each individual packet in the upstream transmission window 430 received in the electrical stage 220 is received at the drop point 250 before that same packet is transmitted in the upstream transmission window 430 in the optical stage 210. To ensure that condition, the following inequality must hold:

$$t_7 + \frac{(G + P_{max})}{R_E^{up}} + T_P^E \le t_{10} + \frac{G}{R_O^{up}}, \qquad (2)$$

where $t_7$ is a time that the $CPE_1$ $270_1$ begins transmission of the upstream transmission window 430; $P_{max}$ is a maximum packet size; $t_{10}$ is a time that the drop point 250 begins transmission of the upstream transmission window 430 upstream to the OLT 230 in the optical stage 210; and $G$, $R_E^{up}$, $T_P^E$, and $R_O^{up}$ are defined above. Rearranging inequality 2 provides the following:

$$t_{10} \ge t_7 + T_P^E + \frac{G}{R_E^{up}} - \frac{(G - P_{max})}{R_O^{up}}. \qquad (3)$$

A polling time, T, may be represented by the following equation:

$$T = 2T_G^O + T_P^O + T_G^E + 2T_P^E + \frac{G}{R_E^{up}} - \frac{(G - P_{max})}{R_O^{up}} + T_P^O. \qquad (4)$$

Rearranging equation 4 provides the following equation:

$$T = \left(2T_G^O + T_G^E\right) + 2\left(T_P^O + T_P^E\right) + \left[\frac{G}{R_E^{up}} - \frac{G}{R_O^{up}} + \frac{P_{max}}{R_O^{up}}\right]. \qquad (5)$$

In equation 5, the terms grouped in the first set of parentheses may represent the total time it takes to transmit downstream the first gate message 410 and the second gate message 420, the terms grouped in the second set of parentheses may represent the total propagation delays, and the terms grouped in the brackets may represent the total time it takes to transmit the upstream transmission window 430.

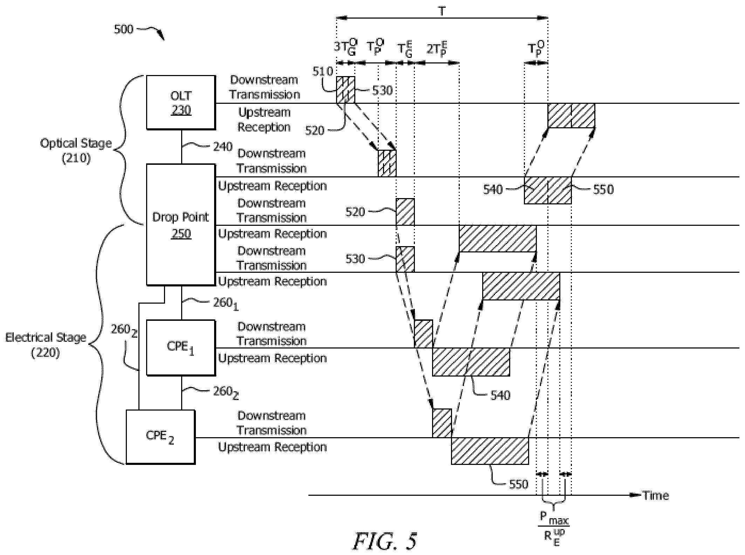

FIG. 5 is a polling timing diagram 500 for the drop point 250 and two of the $CPEs_{1-n}$ $270_{1-n}$ of FIG. 2 according to an embodiment of the disclosure. In particular, the diagram 500 may be for the drop point 250, the $CPE_1$ $270_1$, and the $CPE_2$ $270_2$. Similar to the diagram 400, the diagram 500 may include for the drop point 250 a first gate message 510, which may be similar to the first gate message 410; for the $CPE_1$ $270_1$ a second gate message 520, which may be similar to the second gate message 420; and for the $CPE_1$ $270_1$ a first upstream transmission window 540, which may be similar to the upstream transmission window 430. The diagram 500 may, however, also include for the $CPE_2$ $270_2$ a third gate message 530 and a second upstream transmission window 550. Accordingly, a polling time, T, may be represented by the following equation:

$$T = (1 + 2)T_G^O + T_G^E + 2T_P^O +$$
$$\max\left[2T_{P_1}^E + \frac{G_1}{R_E^{up}} - \frac{G_1}{R_O^{up}}, 2T_{P_2}^E + \frac{G_2}{R_E^{up}} - \frac{(G_1 + G_2)}{R_O^{up}}\right] + \frac{P_{max}}{R_O^{up}}, \qquad (6)$$

where $T_{P_1}^E$ may be a propagation delay from the drop point 250 to the $CPE_1$ $270_1$ over the parallel transmission channel$_1$ $260_1$, $G_1$ may be a grant window size for the $CPE_1$ $270_1$, $T_{P_2}^E$ may be a propagation delay from the drop point 250 to the $CPE_2$ $270_2$ over the parallel transmission channel$_2$ $260_2$, and $G_2$ may be a grant window size for the $CPE_1$ $270_1$. When looking at equation 6, the following inequality can be seen to minimize T:

$$2T_{P_2}^E + \frac{G_2}{R_E^{up}} > 2T_{P_1}^E + \frac{G_1}{R_E^{up}}. \qquad (7)$$

As can be seen, when polling multiple CPEs, the CPE whose propagation delay plus grant window size is largest should be polled last. Generalizing equation 6 to n CPEs produces the following equation:

$$T = (1 + n)T_G^O + T_G^E + 2T_P^O + \max_{i=1-n}\left[2T_{P_i}^E + \frac{G_i}{R_E^{up}} - \frac{\Sigma_{j=1}^i G_j}{R_O^{up}}\right] + \frac{P_{max}}{R_O^{up}}. \qquad (8)$$

When looking at equation 8, it can be seen that CPE transmissions should be ordered in ascending order according to the following expression:

$$2T_{P_i}^E + \frac{G_i}{R_E^{up}}, \qquad (9)$$

FIGS. 3-5 show that, when the OLT 230 is able to determine expression 9 for each of the $CPEs_{1-n}$ $270_{1-n}$, the OLT 230 may prioritize all subsequent upstream transmission windows of the $CPEs_{1-n}$ $270_{1-n}$. The OLT 230 may already know $T_{P_i}^E$ for each of the $CPEs_{1-4}$ $270_{1-n}$ and may know and $R_E^{up}$, for instance based on prior messaging, so the OLT 230 may be able to determine expression 9 for each of the $CPEs_{1-n}$ $270_{1-n}$ upon assigning $G_i$ for each of the $CPEs_{1-n}$ $270_{1-n}$. After determining expression 9 for each of the $CPEs_{1-n}$ $270_{1-n}$, the OLT 230 may prioritize the upstream transmission windows according to expression 9. The OLT 230 may inform the drop point 250 and the $CPEs_{1-n}$ $270_{1-n}$ of the prioritization via the window start times in the gate messages. The prioritization may not occur in the electrical stage 220 because the parallel transmission $channels_{1-n}$ $260_{1-n}$ may be parallel to each other and therefore not require timed access, but the prioritization may occur in the optical stage 210 because the shared transmission channel 240 may require timed access. The prioritizing of upstream transmission windows may be maintained for a granting cycle. Subsequent granting cycles may have different prioritizations based on new polling. The OLT 230 or another node may instruct the drop point 250 to perform the described ordering and may do so in a MAC layer message. The ordering may also be based on class. For example, all emergency messages may be given priority over all non-emergency messages. The emergency and non-emergency messages may then be ordered within their respective groups based on polling time.

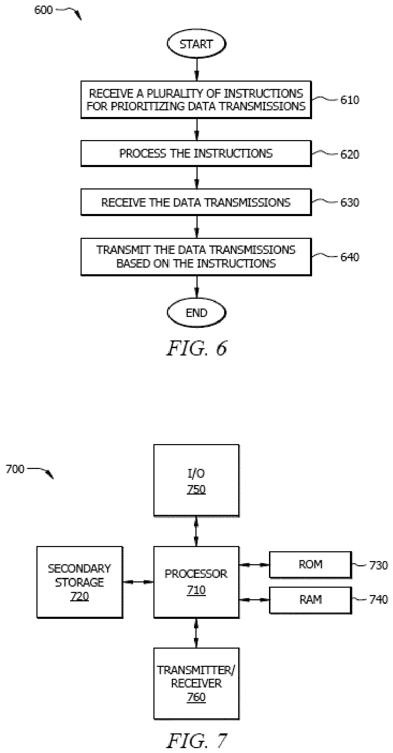

FIG. 6 is a flowchart illustrating a method 600 of prioritizing data transmissions according to an embodiment of the disclosure. The method 600 may be implemented in the drop point 250. At step 610, a plurality of instructions for prioritizing data transmissions may be received. The instructions may be gate messages, or window start times included in those gate messages, and the instructions may be received from the OLT 230. At step 620, the instructions may be processed. At step 630, the data transmissions may be received. The transmissions may be received from the $CPEs_{1-n}$ $270_{1-n}$. At step 640, the data transmissions may be transmitted based on the instructions. The drop point 250 may transmit the data transmissions to the OLT 230. The instructions may instruct prioritizing of the data transmissions so that one of the data transmissions with a shortest polling time is transmitted first. The instructions may further instruct prioritizing of the data transmissions so that one of the data transmissions with a longest polling time is transmitted last and so that data transmissions with a plurality of intermediate polling times are transmitted between the one of the data transmissions with a shortest polling time and the one of the data transmissions with a longest polling. The prioritizing may be based off of the equation 8 or the expression 9.

FIG. 7 is a schematic diagram of a computer system 700 according to an embodiment of the disclosure. The system 700 may be suitable for implementing the disclosed embodiments. The system 700 may comprise a processor 710 that is in communication with memory devices, including secondary storage 720, read only memory (ROM) 730, random access memory (RAM) 740, input/output (I/O) devices 750, and a transmitter/receiver 760. Although illustrated as a single processor, the processor 710 is not so limited and may comprise multiple processors. The processor 710 may be implemented as one or more central processor unit (CPU) chips, cores (e.g., a multicore processor), field-programmable gate arrays (FPGAs), application specific integrated circuits (ASICs), and/or digital signal processors (DSPs), and/or may be part of one or more ASICs. The processor 710 may be implemented using hardware or a combination of hardware and software.

The secondary storage 720 may comprise one or more disk drives or tape drives and may be used for non-volatile storage of data and as an overflow data storage device if the RAM 740 is not large enough to hold all working data. The secondary storage 720 may be used to store programs that are loaded into the RAM 740 when such programs are selected for execution. The ROM 730 may be used to store instructions and data that are read during program execution. The ROM 730 may be a non-volatile memory device that may have a small memory capacity relative to the larger memory capacity of the secondary storage 720. The RAM 740 may be used to store volatile data and perhaps to store instructions. Access to both the ROM 730 and the RAM 740 may be faster than to the secondary storage 720.

The transmitter/receiver 760 may serve as an output and/or input device of the system 700. For example, if the transmitter/receiver 760 is acting as a transmitter, it may transmit data out of the system 700. If the transmitter/receiver 760 is acting as a receiver, it may receive data into the system 700. The transmitter/receiver 760 may take the form of modems; modem banks; Ethernet cards; universal serial bus (USB) interface cards; serial interfaces; token ring cards; fiber distributed data interface (FDDI) cards; wireless local area network (WLAN) cards; radio transceiver cards such as code division multiple access (CDMA), global system for mobile communications (GSM), long-term evolution (LTE), worldwide interoperability for microwave access (WiMAX), and/or other air interface protocol radio transceiver cards; and other well-known network devices. The transmitter/receiver 760 may enable the processor 710 to communicate with the Internet or one or more intranets. The I/O devices 750 may comprise a video monitor, liquid crystal display (LCD), touch screen display, or other type of video display for displaying video, and may also include a video recording device for capturing video. The I/O devices 750 may also include one or more keyboards, mice, trackballs, or other well-known input devices.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations may be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, $R_1$, and an upper limit, $R_u$, is disclosed, any number falling within the range is specifically disclosed. In particular, the following numbers within the range are specifically disclosed: $R = R_1 + k * (R_u - R_1)$, wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ..., 95 percent, 96 percent, 97 percent, 98 percent, 99 percent, or 100 percent. Moreover, any numerical range defined by two R numbers as defined in the above is also specifically disclosed. The use of the term "about" means +/- 10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having may be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application.

While several embodiments have been provided in the present disclosure, it may be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and may be made without departing from the scope disclosed herein.

## Claims

1.   An apparatus (250, 700) **characterized by**:

a receiver (760) configured to receive a plurality of instructions, a plurality of first messages, and a plurality of second messages; wherein the first messages are gate messages and the second messages are upstream transmission windows, wherein each gate message indicates an upstream transmission window start time and a size of a corresponding upstream transmission window;
a processor (710) coupled to the receiver (760) and configured to process the instructions, the first messages, and the second messages; and
a transmitter (760) coupled to the processor (710) and configured to transmit the second messages based on the instructions, wherein the instructions instruct the processor (710) to transmit the second messages based on polling times, wherein polling times are total times from initiation of polling signaling from an optical line terminal, OLT, (230) to a time a first bit transmitted from the apparatus (250, 700) is received at the OLT (230).

2. The apparatus (250, 700) of claim 1, wherein the apparatus (250, 700) is a drop point comprising an optical network unit, ONU, and a digital subscriber line access multiplexer, DSLAM.

3. The apparatus (250, 700) of claim 1, wherein the receiver (760) is configured to receive the instructions from an optical line terminal, OLT, (230) receive the gate messages from the OLT, (230) and receive the upstream transmission windows from customer premises equipments, CPEs, $(270_1, 270_2)$ and wherein the transmitter (760) is configured to transmit the upstream transmission windows to the OLT (230) in an order starting with a CPE $(270_1, 270_2)$ with a shortest polling time and ending with a CPE $(270_1, 270_2)$ with a longest polling time.

4. The apparatus (250, 700) of claim 3, wherein the order is maintained for a granting cycle and subsequent orders are maintained for subsequent granting cycles.

5. The apparatus (250, 700) of claim 4, wherein the transmitter (760) is further configured to transmit the upstream transmission windows based on a plurality of classes associated with the upstream transmission windows.

6. The apparatus (250, 700) of claim 5, wherein the classes comprise an emergency class and a non-emergency class.

7. The apparatus (250, 700) of claim 1, wherein the receiver (760) is further configured to receive the instructions via a media access control, MAC, layer.

8. A method performed by an apparatus (250, 700), the method **characterized by**:

   receiving a plurality of instructions for prioritizing data transmissions (S610);
   processing the instructions (S620);
   receiving the data transmissions (S630) ; and
   transmitting the data transmissions based on the instructions, wherein the instructions instruct prioritizing of the data transmissions so that one of the data transmissions associated with a shortest polling time is transmitted first, wherein a polling time is a total time from initiation of polling signaling from an optical line terminal, OLT, (230) to a time a first bit transmitted from the apparatus (250, 700) is received at the OLT (230) (S640).

9. The method of claim 8, wherein the instructions further instruct prioritizing of the data transmissions so that one of the data transmissions associated with a longest polling time is transmitted last.

10. The method of claim 9, wherein the instructions further instruct prioritizing of the data transmissions so that data transmissions associated with a plurality of intermediate polling times are transmitted between the one of the data transmissions associated with a shortest polling time and the one of the data transmissions associated with a longest polling.

11. The method of claim 10, wherein the shortest polling time, the longest polling time, and the intermediate polling times are calculated based on the equation

$$T = (1+n)T_G^O + T_G^E + 2T_P^O + \max_{i=1-n}\left[2T_{P_i}^E + \frac{G_i}{R_E^{up}} - \frac{\sum_{j=1}^i G_j}{R_O^{up}}\right] + \frac{P_{max}}{R_O^{up}} \, ,$$

wherein T is a polling time, n is a number of customer premises equipments, CPEs, $(270_1, 270_2)$ $T_G^O$ is a time to transmit a gate message indicating an upstream transmission window start time and a size of a corresponding transmission window from an optical line terminal, OLT (230), to a drop point, $T_G^E$ is a time to transmit the gate message from the drop point to the CPEs $(270_1, 270_2)$, $T_P^O$ is a propagation delay between the OLT (230) and the drop point, $T_{P_i}^E$ is a propagation delay between the drop point and an ith CPE $(270_1, 270_2)$, $G_i$ is a grant window size for the ith CPE $(270_1, 270_2)$, $R_E^{up}$ is a transmission rate from the CPEs $(270_1, 270_2)$ to the drop point, $G_j$ is a grant window size for a jth CPE $(270_1, 270_2)$, $R_O^{up}$ is a transmission rate from the drop point to the OLT (230), and $P_{max}$ is a maximum packet size.

**12.** The method of claim 8, wherein the instructions are received via a media access control, MAC, layer.

**13.** The method of claim 8, wherein the data transmissions are response messages of a polling process.

**Patentansprüche**

**1.** Einrichtung (250, 700), **gekennzeichnet durch**:

einen Empfänger (760), eingerichtet zum Empfangen einer Vielzahl von Anweisungen, einer Vielzahl von ersten Nachrichten und einer Vielzahl von zweiten Nachrichten, wobei die ersten Nachrichten Gatternachrichten sind und die zweiten Nachrichten stromaufwärtige Übertragungsfenster sind, wobei jede Gatternachricht eine Startzeit des stromaufwärtigen Übertragungsfensters und eine Größe eines entsprechenden stromaufwärtigen Übertragungsfensters anzeigt;
einen Prozessor (710), angekoppelt an den Empfänger (760) und eingerichtet zum Verarbeiten der Anweisungen, der ersten Nachrichten und der zweiten Nachrichten;
und
einen Sender (760), angekoppelt an den Prozessor (710) und eingerichtet zum Übertragen der zweiten Nachrichten basierend auf den Anweisungen, wobei die Anweisungen den Prozessor (710) anweisen, die zweiten Nachrichten basierend auf Abfragezeiten zu übertragen, wobei Abfragezeiten Gesamtzeiten vom Anstoßen von Abfragesignalisierung von einem Lichtleitungsendgerät OLT (Optical Line Terminal), (230) zu einer Zeit sind, wenn ein von der Einrichtung (250, 700) übertragenes erstes Bit am OLT (230) empfangen wird.

**2.** Einrichtung (250, 700) nach Anspruch 1, wobei die Einrichtung (250, 700) einen Anschlusspunkt ist, der eine optische Netzeinheit, ONU (Optical Network Unit), und einen digitalen Teilnehmerleitungszugangsmultiplexer, DSLAM (Digital Subscriber Line Access Multiplexer), umfasst.

**3.** Einrichtung (250, 700) nach Anspruch 1, wobei der Empfänger (760) eingerichtet ist zum Empfangen der Anweisungen von einem Lichtleitungsendgerät, OLT, (230), Empfangen der Gatternachrichten von dem OLT (230) und Empfangen der stromaufwärtigen Übertragungsfenster von Kundenstandortgeräten, CPE (Customer Premises Equipments), ($270_1$, $270_2$) und wobei der Sender (760) eingerichtet ist zum Übertragen der stromaufwärtigen Übertragungsfenster zu dem OLT (230) in einer Reihenfolge beginnend mit einem CPE ($270_1$, $270_2$) mit einer kürzesten Abfragezeit und endend mit einem CPE ($270_1$, $270_2$) mit einer längsten Abfragezeit.

**4.** Einrichtung (250, 700) nach Anspruch 3, wobei die Reihenfolge für einen Gewährungszyklus unterhalten wird und nachfolgende Reihenfolgen für nachfolgende Gewährungszyklen unterhalten werden.

**5.** Einrichtung (250, 700) nach Anspruch 4, wobei der Sender (760) weiterhin eingerichtet ist zum Übertragen der stromaufwärtigen Übertragungsfenster basierend auf einer Vielzahl von den stromaufwärtigen Übertragungsfenstern zugeordneten Klassen.

**6.** Einrichtung (250, 700) nach Anspruch 5, wobei die Klassen eine Notklasse und eine Nichtnotklasse umfassen.

**7.** Einrichtung (250, 700) nach Anspruch 1, wobei der Empfänger (760) weiterhin eingerichtet ist zum Empfangen der Anweisungen über eine Medienanschlusssteuerungsschicht, MAC(Media Access Control)-Schicht.

**8.** Durch eine Einrichtung (250, 700) durchgeführtes Verfahren, **gekennzeichnet durch**:

Empfangen einer Vielzahl von Anweisungen zum Priorisieren von Datenübertragungen (S610);
Verarbeiten der Anweisungen (S620);
Empfangen der Datenübertragungen (S630); und
Übertragen der Datenübertragungen basierend auf den Anweisungen, wobei die Anweisungen Priorisieren der Datenübertragungen anweisen, so dass eine der der kürzesten Abfragezeit zugeordneten Datenübertragungen zuerst übertragen wird, wobei eine Abfragezeit eine Gesamtzeit vom Anstoßen von Abfragesignalisierung von einem Lichtleitungsendgerät, OLT, (230) zu einer Zeit, wenn ein von der Einrichtung (250, 700) übertragenes erstes Bit am OLT (230) empfangen wird, ist (S640).

**9.** Verfahren nach Anspruch 8, wobei die Anweisungen weiterhin Priorisieren der Datenübertragungen anweisen, so dass eine der einer längsten Abfragezeit zugeordneten Datenübertragungen zuletzt übertragen wird.

10. Verfahren nach Anspruch 9, wobei die Anweisungen weiterhin Priorisieren der Datenübertragungen anweisen, so dass einer Vielzahl von Abfragezwischenzeiten zugeordnete Datenübertragungen zwischen der einen einer kürzesten Abfragezeit zugeordneten Datenübertragungen und der einen der einer längsten Abfragezeit zugeordneten Datenübertragungen übertragen werden.

11. Verfahren nach Anspruch 10, wobei die kürzeste Abfragezeit, die längste Abfragezeit und die Abfragezwischenzeiten basierend auf der Gleichung berechnet werden:

$$T = (1 + n)T_G^O + T_G^E + 2T_P^O + \max_{i=1-n}\left[2T_{P_i}^E + \frac{G_i}{R_E^{up}} - \frac{\sum_{j=1}^i G_j}{R_O^{up}}\right] + \frac{P_{max}}{R_O^{up}},$$

wobei T eine Abfragezeit ist, n eine Anzahl von Kundenstandortgeräten, CPE, $(270_1, 270_2)$ ist, $T_G^O$ eine Zeit zum Übertragen einer Gatternachricht, die eine Startzeit des stromaufwärtigen Übertragungsfensters und eine Größe eines entsprechenden Übertragungsfensters von einem Lichtleitungsendgerät, OLT, (230) zu einem Anschlusspunkt ist, $T_G^E$ eine Zeit zum Übertragen der Gatternachricht vom Anschlusspunkt zu den CPE $(270_1, 270_2)$ ist, $T_P^O$ eine Ausbreitungsverzögerung zwischen dem OLT (230) und dem Anschlusspunkt ist, $T_{P_i}^E$ eine Ausbreitungsverzögerung zwischen dem Anschlusspunkt und einem i-ten CPE $(270_1, 270_2)$ ist, $G_i$ eine Gewährungsfenstergröße für das i-te CPE $(270_1, 270_2)$ ist, $R_E^{up}$ eine Übertragungsrate von den CPE $(270_1, 270_2)$ zum Anschlusspunkt ist, Gj eine Gewährungsfenstergröße für ein j-tes CPE $(270_1, 270_2)$ ist, $R_O^{up}$ eine Übertragungsrate vom Anschlusspunkt zum OLT (230) ist und $P_{max}$ eine maximale Paketgröße ist.

12. Verfahren nach Anspruch 8, wobei die Anweisungen über eine Medienanschlusssteuerungsschicht, MAC(Media Access Control)-Schicht, empfangen werden.

13. Verfahren nach Anspruch 8, wobei die Datenübertragungen Antwortnachrichten eines Abfragevorgangs sind.

**Revendications**

1. Appareil (250, 700) **caractérisé par** :

   un récepteur (760) conçu pour recevoir une pluralité d'instructions, une pluralité de premiers messages et une pluralité de deuxièmes messages ; les premiers messages étant des messages de porte et les deuxièmes messages étant des fenêtres d'émission en amont, chaque message de porte indiquant un instant de début de fenêtre d'émission en amont et une taille d'une fenêtre d'émission en amont correspondante ;
   un processeur (710) couplé au récepteur (760) et conçu pour traiter les instructions, les premiers messages et les deuxièmes messages ; et
   un émetteur (760) couplé au processeur (710) et conçu pour émettre les deuxièmes messages selon les instructions, ces instructions ordonnant au processeur (710) d'émettre les deuxièmes messages selon des temps de sondage, les temps de sondage étant les temps totaux entre le début de la signalisation de sondage reçue d'un terminal de ligne optique, OLT, (230) et le moment où un premier bit émis par l'appareil (250, 700) est reçu au niveau de l'OLT (230).

2. Appareil (250, 700) selon la revendication 1, l'appareil (250, 700) étant un point de branchement comprenant une unité de réseau optique, ONU, et un multiplexeur d'accès pour ligne d'abonné numérique, DSLAM.

3. Appareil (250, 700) selon la revendication 1, dans lequel le récepteur (760) est conçu pour recevoir les instructions provenant d'un terminal de ligne optique, OLT, (230) recevoir les messages de porte de l'OLT (230) et recevoir les fenêtres d'émission en amont provenant d'équipements de locaux d'abonnés, CPE, $(270_1, 270_2)$ et dans lequel l'émetteur (760) est conçu pour émettre les fenêtres d'émission en amont à destination de l'OLT (230) dans un ordre tel que l'émission commence par un CPE ($270_1$, $270_2$) ayant un temps de sondage le plus court et se termine par un CPE ($270_1$, $270_2$) ayant un temps de sondage le plus long.

4. Appareil (250, 700) selon la revendication 3, dans lequel l'ordre est maintenu pendant un cycle d'octroi et des ordres suivants sont maintenus pendant des cycles d'octroi suivants.

5. Appareil (250, 700) selon la revendication 4, dans lequel l'émetteur (760) est également conçu pour émettre les fenêtres d'émission en amont selon une pluralité de classes associées aux fenêtres d'émission en amont.

6. Appareil (250, 700) selon la revendication 5, dans lequel les classes comprennent une classe d'urgence et une classe sans urgence.

7. Appareil (250, 700) selon la revendication 1, dans lequel le récepteur (760) est également conçu pour recevoir les instructions par l'intermédiaire d'une couche de contrôle d'accès au support, MAC.

8. Procédé exécuté par un appareil (250, 700), le procédé étant **caractérisé par** les étapes consistant à :

recevoir une pluralité d'instructions servant à prioriser les émissions de données (S610);
traiter les instructions (S620) ;
recevoir les émissions de données (S630) ; et
émettre les émissions de données selon les instructions, ces instructions ordonnant que les émissions de données soient priorisées afin qu'une des émissions de données associée à un temps de sondage le plus court soit effectuée en premier, un temps de sondage étant un temps total entre le début de la signalisation de sondage reçue d'un terminal de ligne optique, OLT, (230) et un moment où un premier bit émis par l'appareil (250, 700) est reçu au niveau de l'OLT (230) (S640).

9. Procédé selon la revendication 8, dans lequel les instructions ordonnent également que les émissions de données soient priorisées afin qu'une des émissions de données associée à un temps de sondage le plus long soit effectuée en dernier.

10. Procédé selon la revendication 9, dans lequel les instructions ordonnent également que les émissions de données soient priorisées afin que les émissions de données associées à une pluralité de temps de sondage intermédiaires soient effectuées entre celle des émissions de données associée à un temps de sondage le plus court et celle des émissions de données associée à un temps de sondage le plus long.

11. Procédé selon la revendication 10, dans lequel le temps de sondage le plus court, le temps de sondage le plus long et les temps de sondage intermédiaires sont calculés selon l'équation

$$T = (1 + n)T_G^O + T_G^E + 2T_P^O + \max_{i=1-n}\left[2T_{P_i}^E + \frac{G_i}{R_E^{up}} - \frac{\sum_{j=1}^i G_j}{R_O^{up}}\right] + \frac{P_{max}}{R_O^{up}},$$

où T est un temps de sondage, n est un nombre d'équipements de locaux d'abonnés, CPE, ($270_1$, $270_2$) $T_G^O$ est un temps pour l'émission d'un message de porte indiquant un instant de début de fenêtre d'émission en amont et une taille d'une fenêtre d'émission correspondante entre un terminal de ligne optique, OLT, (230) et un point de branchement, $T_G^E$ est un temps pour l'émission du message de porte entre le point de branchement et les CPE, ($270_1$, $270_2$) $T_P^O$ est un temps de propagation entre l'OLT (230) et le point de branchement $T_{P_i}^E$ est un est un temps de propagation entre l'OLT (230) et le point de branchement, est un temps de propagation entre le point de branchement et un i-ième CPE ($270_1$, $270_2$), $G_i$ est une taille de fenêtre d'octroi pour le i-ième CPE ($270_1$, $270_2$), $R_E^{up}$ est un débit d'émission entre les CPE ($270_1$, $270_2$) et le point de branchement, Gj est une taille de fenêtre d'octroi pour unj-ième CPE ($270_1$, $270_2$), $R_O^{up}$ est un débit d'émission entre le point de branchement et l'OLT (230), et $P_{max}$ est une taille de paquet maximale.

**12.** Procédé selon la revendication 8, dans lequel les instructions sont reçues par l'intermédiaire d'une couche de contrôle d'accès au support, MAC.

**13.** Procédé selon la revendication 8, dans lequel les émissions de données sont des messages de réponse d'un processus de sondage.

FIG. 1

*FIG. 2*

FIG. 3

FIG. 4

FIG. 5

600 ~

```
          ( START )
              |
              v
  +-------------------------------+
  | RECEIVE A PLURALITY OF        |
  | INSTRUCTIONS FOR PRIORITIZING |---- 610
  | DATA TRANSMISSIONS            |
  +-------------------------------+
              |
              v
  +-------------------------------+
  | PROCESS THE INSTRUCTIONS      |---- 620
  +-------------------------------+
              |
              v
  +-------------------------------+
  | RECEIVE THE DATA TRANSMISSIONS|---- 630
  +-------------------------------+
              |
              v
  +-------------------------------+
  | TRANSMIT THE DATA TRANSMISSIONS|
  | BASED ON THE INSTRUCTIONS      |---- 640
  +-------------------------------+
              |
              v
          ( END )
```

*FIG. 6*

700 ~

```
                    +-----------+
                    |   I/O     |
                    |   750     |
                    +-----------+
                         ^
                         |
                         v
+-----------+       +-----------+       +-----------+
| SECONDARY |       | PROCESSOR |<----->|   ROM     |---- 730
| STORAGE   |<----->|   710     |       +-----------+
|   720     |       |           |       +-----------+
+-----------+       |           |<----->|   RAM     |---- 740
                    +-----------+       +-----------+
                         ^
                         |
                         v
                    +-------------+
                    | TRANSMITTER/|
                    | RECEIVER    |
                    |   760       |
                    +-------------+
```

*FIG. 7*